Europäisches Patentamt

European Patent Office

Office européen des brevets

(11) Publication number: **0 199 865**
**B1**

# EUROPEAN PATENT SPECIFICATION

(45) Date of publication of patent specification: **11.10.89**

(51) Int. Cl.⁴: **H 04 M 19/02**

(21) Application number: **85303095.5**

(22) Date of filing: **01.05.85**

(54) Active impedance transformer-assisted line feed circuit with filtering function of supervision signals.

(43) Date of publication of application:
**05.11.86 Bulletin 86/45**

(45) Publication of the grant of the patent:
**11.10.89 Bulletin 89/41**

(84) Designated Contracting States:
**AT DE FR GB IT NL SE**

(56) References cited:
**EP-A-0 096 965**
**FR-A-2 324 181**

(73) Proprietor: **NORTHERN TELECOM LIMITED**
**1600 Dorchester Boulevard West**
**Montreal Quebec H3H 1R1 (CA)**

(72) Inventor: **Rosenbaum, Stanley Daniel**
**2074 Woodcrest Road**
**Ottawa Ontario, K1H 6H8 (CA)**
Inventor: **Holy, Zdenek J.**
**28A Woodvale Green**
**Nepean Ontario, K2G 4H4 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

The invention relates to line interface circuits for supplying energizing current and ringing signals to a communication line.

In previous European application Serial EP—A—096 965 a line feed circuit is described which includes tip and ring voltage amplifiers having outputs being resistively coupled via tip and ring feed resistors and tip and ring transformer windings to tip and ring terminals for connection to a communication line. A control circuit includes a differential input being connected to a resistive network associated with the feed resistors and to a secondary winding of the transformer. The tip and ring voltage amplifiers are controlled by the control circuit to have effective output d.c. resistances and a.c. impedances as preferred for operation of a telephone line.

The description of the line feed circuit was not concerned with various ancillary functions often included in practical line feed circuits. At that time provision of other functions such as a supply of ringing current and ringing signal supervision were more or less assumed to be functions not directly affecting the design of the example embodiments described in the application as these functions and circuit means for same are well known to persons of normal skill in the field of telephone lines and line circuits.

The supply of supervisory signals for control of ringing currents for a telephone line is typically provided through a low pass filter which is followed by a threshold circuit for detecting a transition from an ON HOOK state to an OFF HOOK state of the telephone line. The low pass filter is connected to a supervision signal output lead of the line feed circuit during a ringing portion of a telephone call progress. The low pass filter substantially reduces a.c. signal components resulting from ringing currents on the telephone line while passing signals resulting from direct current on the telephone line to a threshold circuit. The threshold circuit detects the OFF HOOK state in response to the filtered signal of a value indicating a direct line current of about 20 milliamps or more. This detection is used to subsequently disconnect a ringing supply and thereafter activate a talking battery supply via the line feed circuit.

It has been proposed in French Application FR—A—2 324 181 to provide a line feed circuit including a ringing current supply and ON/OFF-HOOK state detection circuits comprising a feed switch for conducting energizing currents comprising a feed switch for conducting energizing currents via tip and ring lines and transformer windings. The feed switch is operable in response to a ring signal for conducting ringing currents via the tip and ring lines. Control switch means is provided which is responsive to the ring signal for open circuiting the secondary winding of the transformer such that an amplifier in the circuit in combination with an RC network function and a low pass filter to reduce a.c. signal components in a supervisory signal.

Subsequent to the previously mentioned European application, it has been realised that the control circuit in various examples of the line circuit described therein is subject to modification such that the function of filtering the supervisory signal is obtained with less complexity and cost than was previously expected. Furthermore it has been realized that with additional modification the function of ringing signal supervision is more efficiently provided.

The present invention provides a line circuit including tip and ring terminals for connection to a two wire communication line, tip and ring amplifiers having outputs connected in series with tip and ring primary windings of a transformer and tip and ring feed resistors to the tip and ring terminals for supplying the communication line with energizing currents, a control circuit, being responsive to a.c. signals from a secondary winding of the transformer being coupled via a resistive capacitive network to an amplifier in the control circuit, for providing a supervisory signal for indicating the state of the communication line as being one of ON HOOK and OFF HOOK, and for providing a control signal for operation of the tip and ring amplifiers the line circuit being characterised in that

a feed switch is provided for conducting the energizing currents via the tip and ring feed resistors and the tip and ring primary windings and being operable in response to a ring signal for conducting ringing currents via the tip and ring feed resistors to the exclusion of the tip and ring primary windings;

control switch means is provided being responsive to the ring signal for open circuiting the secondary winding such that the amplifier in the circuit in combination with the resistive capacitive network functions as a low pass filter to reduce a.c. signal components in the supervisory signal, and in that the resistive capacitive network includes a first resistor connected to an output of the amplifier in the control circuit and a first capacitor connected between the first resistor and an inverting input of said amplifier, the secondary winding being connected between the control switch means and a junction of the first resistor and the first capacitor.

Example embodiments of the invention are discussed with reference to the accompanying drawings in which:

Figure 1 is a schematic diagram of a line circuit in accordance with the invention;

Figure 2 is a schematic diagram of part of the line circuit in Figure 1, illustrating another embodiment thereof; and

Figure 3 is a schematic diagram of an alternate embodiment of parts of the line circuits illustrated in Figures 1 and 2.

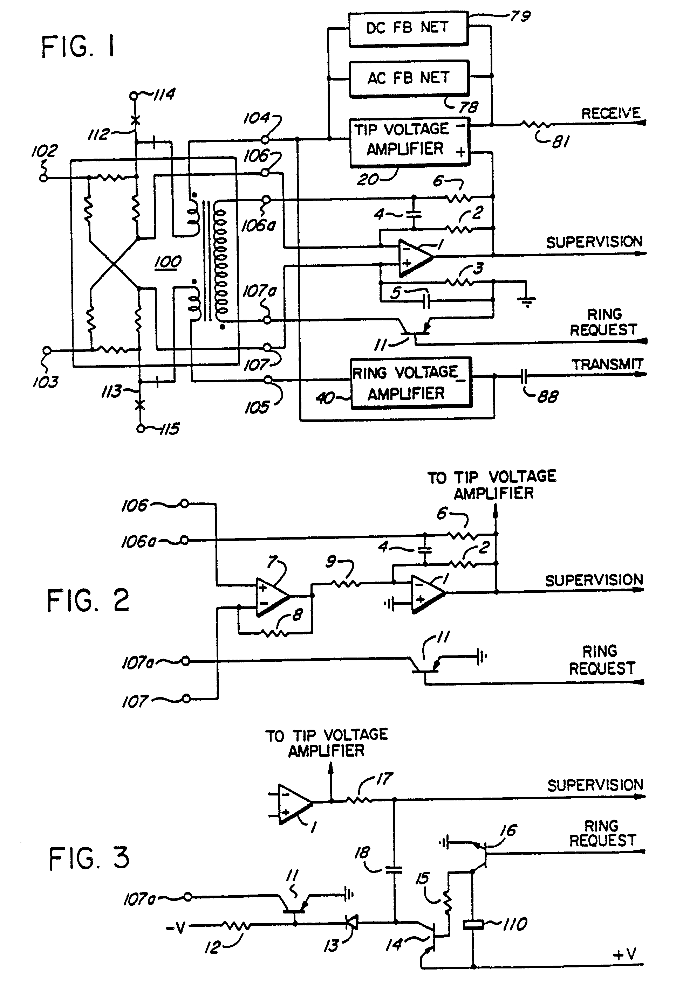

The line circuit in Figure 1 is generally of similar form and functions as a line circuit described in the previously mentioned application, that is except for a control switch which is provided by a transistor 11 and transfer contacts 112 and 113. Very briefly the transistor 11 is response to be on in the absence of a ring signal which can be supplied from an associated telephone switching facility, not shown, via a ring request lead. In the presence of the ring signal the transistor 11 is biased OFF thereby open circuiting a secondary winding of a transformer connected at terminals 107a and 106a. This in turn causes a resistive capacitive network provided by components 4 and 6 to function as an a.c. feed back path around an amplifier 1 so that it is substantially limited to passing signals, including direct current and frequency components of lesser frequency than an a.c. component of a typical telephone ringing signal. The output of the amplifier 1 is directly useable in most cases as a supervisory signal suitable for OFF HOOK detection during an active portion of a ringing cadence in a telephone call progress. Figure 3 illustrates an additional switched filter (17 and 18) which is particularly useful in a case where ringers of up to for example five telephones are supplied with ringing current via the telephone line.

Considering Figure 1 in more detail a network 100 terminates at tip and ring terminals 102 and 103 which are for connection to a two wire communication line, not shown. The network 100 is connected to the remainder of the line circuit via terminals 104, 105, 106, 106a, 107 and 107a as shown. The remainder of the line circuit is preferably provided in an integrated circuit form, except for a few discrete components, such as some capacitors, which are not practical to integrate. As these capacitor components contribute significantly to the total cost of the line circuit it is an advantage of the invention that a ringing supervision filter function in the line circuit is implemented using one of the capacitive components for two different functions. The network 100 includes a serial connection of a tip feed resistor and a tip primary winding between the terminals 102 and 104 via a break portion of the transfer contact 112. A ring feed resistor and a ring primary winding are serially connected between the terminals 103 and 105 via a break portion of the transfer contact 113. A tip voltage tap of a tip voltage divider is connected to the terminal 106. A ring voltage tap of a ring voltage divider is connected to the terminal 107. The secondary winding is connected across the terminals 106a and 107a. The tip primary, ring primary and secondary windings are arranged about a miniature transformer core and are poled as indicated by dot convention in figure 1. The transfer contacts 112 and 113 each include make portions which terminate at terminals 114 and 115 for connection across a supply of ringing current, not shown.

Although the structure of the integrated circuit portion is of some variance with respect to examples described in the previously mentioned European patent application the operation is substantially the same. A control circuit is provided by the amplifier 1 and the associated resistive components 2, 3 and 6 and the associated capacitive components 4 and 5. The amplifier 1 is differentially responsive to d.c. resistively coupled voltage signals from the terminals 106 and 107 which are representative of currents traversing the tip and ring feed resistors, for providing a d.c. bias to a non-inverting input of a tip voltage amplifier 20. The response of amplifier 1 to a.c. signals from terminals 106 and 107 is greatly diminished by negative feedback through capacitor 4 and by a low a.c. impedance to ground presented by capacitor 5. However, the amplifier 1 is responsive to inductively coupled signals from the terminal 106a, the terminal 107a being normally grounded via transistor 11. These signals are capacitively coupled via the capacitor 4 and provide an a.c. drive signal for the non-inverting input of the tip voltage amplifier 20. A.C. and d.c. feedback networks 78 and 79 are connected across the tip voltage amplifier between an inverting input and an output thereof for predetermining the response of the tip voltage amplifier 20 to the signal at its input such that it operates with predetermined output impedance and resistance characteristics. A ring voltage amplifier 40 includes an output connected at the terminal 105 and an input connected at the terminal 104. The ring voltage amplifier is arranged to have unity gain and merely inverts the signals appearing at the terminal 104 to provide complementary signals at the terminal 105. Transmit and receive leads are for connection to a hybrid circuit, not shown, in association with the telephone facility. A.C. signals for transmission via the communication line are coupled from the receive lead via a resistor 81 to the tip voltage amplifier. All of the a.c. signals on the communication line are coupled from the terminal 104 via a capacitor 88 to the transmit lead.

A circuit via the secondary winding is provided by the transistor 11 which is normally maintained ON. A direct current flow from ground to the output of the amplifier 1 traverses a path which includes the resistor 6, the terminal 106a, the secondary winding in the network 100, the terminal 107a, and the collector and emitter electrodes of the transistor 11. The direct current is modulated by a.c. differential communication line signals being inductively coupled to the secondary winding from the tip and ring primary windings. The direct current also has a beneficial effect in that in the illustrated line circuit the miniature core is d.c. flux compensated in accordance with the ohmic value of resistor 6.

During ON HOOK periods of operation the line circuit normally supplies little or no current to the communication line. Normal OFF HOOK operation commences when the external resistance applied between the terminals 102 and 103 falls to a value of less than a maximum of about 2000 ohms. Therefore in the ON HOOK condition the amplifier 1 is used to provide a supervisory signal on a supervisory lead for indicating the ON HOOK state to the associated telephone facility. For this purpose the amplifier 1 is responsive to the voltage at the tip voltage tap and the ring voltage tap terminals 106 and 107. During the ON HOOK state these voltages are substantially the same. These voltages diverge upon a transition to the OFF HOOK state, the voltage at the tip voltage tap becoming more negative and the voltage at the ring voltage tap becoming more positive. This causes the output of the amplifier 1 to correspondingly become more negative to provide a supervisory signal indication of the OFF HOOK state. During the OFF HOOK state the amplifier also provides d.c. bias and a.c. voice band signals for the operation of the tip voltage amplifier 20 and consequently the ring voltage amplifier 40.

During ON HOOK operation in a ringing portion of a call progress, the transfer contacts 112 and 113 are operated to supply ringing current via the terminals 114 and 115, and the tip and ring feed resistors to the tip and ring terminals 102 and 103. At the same time the transistor 11 is switched OFF, open circuiting the secondary winding. Where before the amplifier 1 was equally responsive to both d.c. and a.c. tip and ring signals, the a.c. signal response being primarily determined by inductive coupling, its a.c. response, with no inductive coupling is now determined by the resistor 2 in combination with an a.c. feed back path provided by the resistor 6 and the capacitor 4. The amplifier 1 is therefore reconfigured during the ringing portion of the call progress to be a low pass filter. Thus the supervisory signal is provided at the output of the amplifier 1 with very little of the a.c. component of the ringing currents. The supervisory signal is therefore a useful indication of a direct current component of the ringing current in exactly the same manner in which it is used for indicating the normal energizing line current.

The circuit in figure 2 reduces the discrete component capacitor count by one more in comparison with the line circuit in figure 1. This is achieved by adding a differential amplifier 7 for differentially amplifying the tip and ring voltage signals with a gain as being adjusted by the ohmic value of a resistor 8. The output of the amplifier 7 is coupled to the inverting input of the amplifier 1. This requires that only the capacitor 4 be used for a.c. coupling of the secondary winding and the capacitor 5 in figure 1 is eliminated in figure 2.

The circuit in figure 3 provides among other features further filtering of a.c. signal components in the supervisory signal so that the higher ringing currents, typical of communication lines with multiple telephone station apparatus, are accommodated. As before illustrated the output of the amplifier 1 is connected to the tip voltage amplifier 20. The output is also resistively connected to the supervision lead via a resistor 17. A capacitor 18 is connected between the supervision lead and a collector electrode of a transistor 14. The collector electrode of the transistor 14 is also connected to a negative voltage supply —V via a diode 13 and a resistor 12. A junction between the resistor 12 and the diode 13 is connected to a base electrode of the transistor 11. A relay includes an operate coil 110 in association with the transfer contacts 112 and 113. The relay is operated by a transistor 16 which is connected in series with the relay operate coil 110 between ground and a positive voltage supply +V. The collector electrode of the transistor 16 is also connected by a resistor 15 to a base electrode of the transistor 14.

In operation a ring signal received on the ring request lead causes the transistor 16 to switch ON thus operating the relay coil 110 and its associated transfer contacts to supply the communication line with ringing current. At the same time the transistor 14 is also switched ON via the resistor 15 to provide an a.c. ground to the capacitor 18 so that the capacitor 18 in combination with the resistor 17 provides a low pass filter function for signals on the supervision lead. At the same time, the transistor 14 also provides turn OFF bias for the transistor 11 so that the secondary winding is open circuited. When the ring signal on the ring request lead is withdrawn the transistors 16 and 15 each turn OFF. After an operate delay time the relay transfer contacts return to a non operated position thereby disconnecting the terminals 114 and 115 and re-establishing connection between the tip and ring terminals 102 and 103 and the outputs of the tip and ring voltage amplifiers 20 and 40 respectively.

**Claims**

1. A line circuit including tip and ring terminals (102, 103) for connection to a two wire communication line, tip and ring amplifiers (20, 40) having outputs connected in series with tip and ring primary windings of a transformer and tip and ring feed resistors to the tip and ring terminals for supplying the communication line with energizing currents, a control circuit, being responsive to a.c. signals from a secondary winding of the transformer being coupled via a resistive capacitive network (4, 6) to an amplifier (1) in the control circuit, for providing a supervisory signal for indicating the state of the communication line as being one of ON HOOK and OFF HOOK, and for providing a control signal for operation of the tip and ring amplifiers (20, 40) the line circuit being characterized in that

a feed switch (112, 113) is provided for conducting the energizing currents via the tip and ring feed resistors and the tip and ring primary windings and being operable in response to a ring signal for conducting ringing currents via the tip and ring feed resistors to the exclusion of the tip and ring primary windings;

control switch means (11) is provided being responsive to the ring signal for open circuiting the secondary winding such that the amplifier (1) in the circuit in combination with the resistive capacitive network (4, 6) functions as a low pass filter to reduce a.c. signal components in the supervisory signal, and in that the resistive capacitive network (4, 6) includes a first resistor connected to an output of the amplifier in the control circuit and a first capacitor (4) connected between the first resistor and an inverting input of said amplifier, the secondary winding being connected between the control switch means (11) and a junction of the first resistor (6) and the first capacitor (4).

2. A line circuit as defined in claim 1 wherein the amplifier (1) in the control circuit is a differential amplifier having inverting and non-inverting inputs being connected to tip and ring voltage taps respectively, the resistive capacitive network (4, 6) includes a first resistor (6) and a first capacitor (4) connected in series between an output of the differential amplifier (1) and the inverting input, and a resistor (3) connected in parallel with a capacitor (5) between ground and the non-inverting input, the control switch means (11) includes a semiconductor device and the secondary winding is connected between the semiconductor device and a junction of the first capacitor (4) and the first resistor (6) such that a direct current path between the output of the differential amplifier (1) and ground is provided via the first resistor, the secondary winding and the semiconductor device in the absence of the ring signal.

3. A line circuit as defined in claim 1 further comprising:

a filter network (17, 18) being connected in series with the output of the amplifier (1) in the control circuit and having an output for providing the supervisory signal; and

means (14, 15, 16) for a.c. grounding a port of the filter network for causing the filter network to have a low pass characteristic in response to the presence of the ring signal, whereby the a.c. signal components in the supervisory signal are further reduced at the output of the filter network.

4. A line circuit as defined in claim 1 wherein the control switch means (11) is a semiconductor device connected to be in saturation conduction via the secondary winding and the first resistor (6) in the absence of the ring signal and to be biased OFF in response to the ring signal.

5. A line circuit as defined in claim 4 wherein the semiconductor device is a first transistor (11) being connected in series with the secondary winding and including a control electrode being resistively connected via a second resistor (12) to a first bias potential.

6. A line circuit as defined in claim 1, wherein the feed switch comprises a relay having an operate coil (110) and associated contacts (112, 113) and being functional to switch from supplying said ringing currents to supplying said energizing currents, the line circuit further comprising:

a filter network including a third resistor (17) being connected in series with the output of the amplifier (1) in the control circuit and a second capacitor (18) being connected in series with the third resistor, the supervisory signal being provided at a junction of the third resistor and the second capacitor;

a second transistor (14) being connected in series between a second bias potential (+V) and the second capacitor (18) and including a control electrode connected to be responsive to the ring signal; and

a diode (13) being connected in series between a junction of the second resistor (12) and the first transistor (11) and a junction of the second capacitor (18) and the second transistor (14), the diode being polled such that when the second transistor is turned ON in response to the presence of the ring signal the first transistor is turned OFF.

## Patentansprüche

1. Leitungsschaltung mit Spitzen/Ring-Klemmen (102, 103) zur Verbindung mit einer Zweidraht-Nachrichtenleitung, mit Spitzen/Ring-Verstärkern (20, 40), die in Reihe mit Spitzen/Ring-Primärwicklungen eines Transformators und Spitzen/Ring-Speisewiderständen mit den Spitzen/Ring-Klemmen verbundene Ausgänge haben zur Versorgung der Nachrichtenleitung mit Betriebsströmen, mit einer Steuerschaltung, die von Wechselstromsignalen von einer Sekundärwicklung des Transformators abhängt, der über ein Widerstands-Kapazitäts-Netz (4, 6) mit einem Verstärker (1) in der Steuerschaltung gekoppelt ist, um ein Überwachungssignal zur Anzeige des Zustandes der Nachrichtenleitung bezüglich des Hörerzustandes "aufgelegt" oder "abgenommen" zu schaffen und ein Steuersignal zum Betrieb der Spitzen/Ring-Verstärker (20, 40) der Leitungsschaltung zu schaffen, dadurch gekennzeichnet, daß

ein Speiseschalter (112, 113) vorgesehen ist, um die Betriebsströme über die Spitzen/Ring-Speisewiderstände und die Spitzen/Ring-Primärwicklungen zu leiten, und in Abhängigkeit von einem Läutesignal betätigbar ist, um Läuteströme über die Spitzen/Ring-Speisewiderstände unter Ausschluß der Spitzen/Ring-Primärwicklungen zu leiten;

Steuerschaltmittel (11) vorgesehen ist, das in Abhängigkeit von dem Läutesignal die Sekundärwicklung öffnet, so daß der Verstärker (1) in der Schaltung in Kombination mit dem Widerstand-Kapazitäts-Netz (4, 6) als ein Tiefpaßfilter wirkt, um Wechselstromsignalkomponenten in dem Überwachungssignal zu reduzieren, und daß das Widerstands-Kapazitäts-Netz (4, 6) einen ersten mit einem Ausgang des Verstärkers in der Steuerschaltung verbundenen Widerstand und einen ersten zwischen dem ersten Widerstand und einem invertierenden Eingang des Verstärkers angeschlossenen Kondensator (4) enthält, wobei die Sekundärwicklung zwischen dem Steuerschaltmittel (11) und einer Verbindungsstelle des ersten Widerstandes (6) mit dem ersten Kondensator (4) angeschlossen ist.

2. Leitungsschaltung nach Anspruch 1, bei der der Verstärker (1) in der Steuerschaltung ein Differentialverstärker mit invertierenden und nicht-invertierenden Eingängen ist, die jeweils mit Spitzen- bzw. Ring-Spannungsabgriffen verbunden sind, das Widerstands-Kapazitäts-Netz (4, 6) einen ersten Widerstand (6) und einen ersten Kondensator (4) enthält, die in Reihe zwischen einem Ausgang des Differentielverstärkers (1) und dem invertierenden Eingang angeschlossen sind, und einen parallel zu einem Kondensator (5) zwischen Masse und dem nicht-invertierenden Eingang angeschlossenen Widerstand (3), das Steuerschaltmittel (11) ein Halbleiterbauelement enthält und die Sekundärwicklung zwischen dem Halbleiterbauelement und einer Verbindung des ersten Kondensators (4) mit dem ersten Widerstand (6) so angeschlossen ist, daß ein Gleichstromweg zwischen dem Ausgang des Differentialverstärkers (1) und Masse über den ersten Widerstand, die Sekundärwicklung und das Halbleiterbauelement in Abwesenheit des Läutesignals geschaffen ist.

3. Leitungsschaltung nach Anspruch 1, weiter mit;

einem Filternetz (17, 18), das in Reihe zwischen dem Ausgang des Verstärkers (1) in der Steuerschaltung angeschlossen ist und einen Ausgang zur Schaffung des Überwachungssignals besitzt; und

Mitteln (14, 15, 16) zur wechselspannungsmäßigen Erdung eines Anschlusses eines Filternetzes, um dem Filternetz eine Tiefpaßcharakteristik zu verleihen in Abhängigkeit von der Anwesenheit des Läutesignals, wodurch die Wechselkomponenten im Überwachungssignal am Ausgang des Filternetzes weiter reduziert sind.

4. Leitungsschaltung nach Anspruch 1, bei der das Steuerschaltmittel (11) ein Halbleiterbauelement ist, das angeschlossen ist, um über die Sekundärwicklung und den ersten Widerstand (6) in Abwesenheit des Läutesignals im Sättigungsleitzustand zu sein und in Abhängigkeit von dem Läutesignal durch Vorspannung AUS zu sein.

5. Leitungsschaltung nach Anspruch 4, bei der das Halbleiterbauelement ein erster Transistor (11) ist, der in Reihe mit der Sekundärwicklung angeschlossen ist und eine Steuereleketrode enthält, die widerstandsmäßig über einen zweiten Widerstand (17) an ein erstes Vorspannungspotential angeschlossen ist.

6. Leitungsschaltung nach Anspruch 1, bei der des Speiseschalter ein Relais mit einer Betätigungswicklung (110) und zugeordneten Kontakten (112, 113) umfaßt, das funktioniert zum Schalten von der Zuleitung der Läuteströme zur Zuleitung der Betriebsströme, wobei die Leitungsschaltung weiter umfaßt:

ein Filternetz einschließlich einem dritten Widerstand (17), der in Reihe zwischen dem Ausgang des Verstärkers (1) in der Steuerschaltung und einem zweiten Kondensator (18) angeschlossen ist, der in Reihe mit dem dritten Widerstand angeschlossen ist, wobei das Überwachungssignal an einer Verbindungsstelle des dritten Widerstandes mit dem zweiten Kondensator geschaffen wird;

eine zweiten Transistor (14), der in Reihe zwischen einem zweiten Vorspannungspotential (+V) und dem zweiten Kondensator (18) angeschlossen ist und eine Steuerelektrode enthält, die zur Reaktion auf das Läutesignal angeschlossen ist; und

eine in Reihe zwischen einer Verbindungsstelle des zweiten Widerstandes (12) mit dem ersten Transistor (11) und einer Verbindungsstelle des zweiten Kondensators (18) mit dem zweiten Transistor (14) angeschlossenen Diode (13), wobei die Diode so gepolt ist, daß beim EINschalten des zweiten Transistors in Reaktion auf die Anwesenheit des Läutesignals der erste Transistor AUSgeschaltet wird.

## Revendications

1. Circuit de ligne comprenant des bornes de tonalité et d'appel (102, 103) pour connexion d'une ligne de communication à deux fils, des amplificateurs de tonalité et d'appel (20, 40) ayant des sorties connectées en série avec des enroulements primaires de tonalité et d'appel d'un transformateur et des résistances d'alimentation de tonalité et d'appel vers les bornes de tonalité et d'appel pour alimenter la ligne de communication avec des courant d'excitation, un circuit de commande étant sensible à des signaux à courant alternatif provenant d'un enroulement secondaire du transformateur étant couplé via un réseau capacitif résistif (4, 6) à un amplificateur (1) dans le circuit de commande, servant à fournir un signal de supervision pour indiquer l'état de la ligne de communication comme étant l'un de RACCROCHE et DECROCHE, et pour fournir un signal de commande pour mettre en action les amplificateurs de tonalité et d'appel (20, 40), le circuit de ligne étant caractérisé en ce que:

un interrupteur d'alimentation (112, 113) est fourni pour conduire les courants d'excitation via les résistances d'alimentation de tonalité et d'appel et les enroulements primaires de tonalité et d'appel et étant commandable en réponse à un signal d'appel pour conduire les courants d'appel via des résistances d'alimentation de tonalité et d'appel jusqu'à l'exclusion des enroulements primaires de tonalité et d'appel;

un moyen de commutation de commande (11) est fourni, étant sensible au signal d'appel pour placer en circuit ouvert l'enroulement secondaire de telle sorte que l'amplificateur (1) dans le circuit en combinaison avec le réseau capacitif résistif (4, 6) fonctionne comme un filtre passe-base pour réduire les composantes de signal à courant alternatif dans le signal de supervision, et en ce que le réseau capacitif résistif (4, 6) comprend une première résistance connectée à une sortie de l'amplificateur dans le circuit de commande et un premier condensateur (4) connecté entre la première résistance et une entrée inverseuse dudit amplificateur, l'enroulement secondaire étant connecté entre le moyen de commutation de commande (11) et une jonction de la première résistance (6) et du premier condensateur (4).

2. Circuit de ligne selon la revendication 1, dans lequel l'amplificateur (1) dans le circuit de commande est un amplificateur différentiel comparant des entrées inverseuse et non inverseuse étant connectées aux prises de tension de tonalité et d'appel, respectivement, le réseau capacitif résistif (4, 6) comprend une première résistance (6) et un premier condensateur (4) connectés en série entre une sortie de l'amplificateur différentiel (1) et l'entrée inverseuse, et une résistance (3) connectée en parallèle à un condensateur (5) entre la terre et l'entrée non inverseuse, le moyen de commutation de commande (11) comprend un dispositif à semi-conducteur et l'enroulement secondaire est connecté entre le dispositif à semi-conducteur et une jonction du premier condensateur (4) et de la première résistance (6) telle qu'un chemin de courant continu entre la sortie de l'amplificateur différentiel (1) et la terre est fourni via la première résistance, l'enroulement secondaire et le dispositif à semi-conducteur en l'absence du signal d'appel.

3. Circuit de ligne selon la revendication 1, comprenant en outre:

un réseau de filtre (17, 18) connecté en série à la sortie de l'amplificateur (1) dans le circuit de commande et comportant une sortie pour fournir le signal de supervision, et

un moyen (14, 15, 16) pour mettre à la terre le courant alternatif d'un accès du réseau de filtre afin d'amener le réseau de filtre à présenter une caractéristique passe-bas en réponse à la présence du signal d'appel, les composantes de signal à courant alternatif dans le signal de supervision étant ainsi encore réduite au niveau de la sortie du réseau de filtre.

4. Circuit de ligne selon la revendication 1, dans lequel le moyen de commutation de commande (11) est un dispositif à semi-conducteur connecté pour être en état saturé via l'enroulement secondaire et la première résistance (6) en l'absence du signal d'appel et pour être polarisé de manière à être bloqué en réponse au signal d'appel.

5. Circuit de ligne selon la revendication 4, dans lequel le dispositif à semi-conducteur est un premier transistor (11) connecté en série à l'enroulement secondaire et comprenant une électrode de commande connectée résistivement via une deuxième résistance (12) à un premier potentiel de polarisation.

6. Circuit de ligne selon la revendication 1, dans lequel le commutateur d'alimentation comprend un relais comportant une bobine de commande (110) et des contacts associés (112, 113) étant opérationnel pour commuter à partir de l'alimentation desdits courants d'appel jusqu'à l'alimentation desdits courant d'excitation, le circuit de ligne comprenant en outre:

un réseau de filtre comprenant une troisième résistance (17) connectée en série à la sortie de l'amplificateur (1) dans le circuit de commande et un deuxième condensateur (18) connecté en série à une troisième résistance, le signal de supervision étant fourni au niveau de la jonction d'une troisième résistance et du deuxième condensateur;

un deuxième transistor (14) connecté en série entre un deuxième potentiel de polarisation (+V) et le deuxième condensateur (18) et comprenant une électrode de commande connectée pour être sensible au signal d'appel, et

une diode (13) connectée en série entre une jonction de la deuxième résistance (12) et le premier transistor (11) et une jonction du deuxième condensateur (18) et le deuxième transistor (14), la diode étant polarisée de telle sorte que lorsque le deuxième transistor devient conducteur en réponse à la présence du signal d'appel, le premier transistor devient bloqué.

FIG. 1

FIG. 2

FIG. 3